# EUROPEAN PATENT SPECIFICATION

(11) **EP 4 511 566 B1**
(45) Date of publication and mention of the grant of the patent: **01.04.2026**
(21) Application number: 23720079.5
(22) Date of filing: 17.04.2023
(51) Int. Cl.: F01K 3/18

(54) **USE OF PHASE CHANGE MATERIALS TO STORE ENERGY FOR HEATING APPLICATIONS IN CHEMICAL PRODUCTION PROCESSES**
VERWENDUNG VON PHASENWECHSELMATERIALIEN ZUM SPEICHERN VON ENERGIE FÜR HEIZANWENDUNGEN IN CHEMISCHEN PRODUKTIONSPROZESSEN
UTILISATION DE MATÉRIAUX À CHANGEMENT DE PHASE POUR STOCKER DE L'ÉNERGIE POUR DES APPLICATIONS DE CHAUFFAGE DANS DES PROCESSUS DE PRODUCTION DE PRODUITS CHIMIQUES

(30) Priority: 20.04.2022 EP 22169045
(43) Date of publication of application: 26.02.2025
(73) Proprietor: SABIC Global Technologies B.V., 4612 PX Bergen op Zoom (NL)
(72) Inventor: STEVENSON, Scott A., Bengaluru 562125 (IN); SCHROER, Joseph William, Bengaluru 562125 (IN); WARD, Andrew Mark, Bengaluru 562125 (IN)
(74) Representative: Fish & Richardson P.C.
(86) International application number: PCT/EP2023/059890
(87) International publication number: WO 2023/202973

(56) References cited:
- US-A1- 2014 366 536
- US-A1- 2015 267 566
- US-A1- 2016 024 973
- US-B2- 9 534 508
- KHANDELWAL NEELAM ET AL: "Recent Developments in Integrated Solar Combined Cycle Power Plants", JOURNAL OF THERMAL SCIENCE, KEXUE CHUBANSHE, CN, vol. 29, no. 2, 7 March 2020 (2020-03-07), pages 298 - 322, XP037055144, ISSN: 1003-2169, [retrieved on 20200307], DOI: 10.1007/S11630-020-1278-2

## Description

### FIELD OF DISCLOSURE

The present disclosure is generally related to a system and a method of storing and releasing thermal energy for heating in process of a chemical plant.

### BACKGROUND

As chemical plants move from burning fossil fuels to meet daily power needs to using electricity from the power grid and/or from renewable sources, the availability and cost of electricity will vary over time. For example, electrical energy from the power grid is typically more expensive during peak consumption hours. Additionally, production of solar and wind energy varies with time of day and weather conditions-e.g., night hours and overcast time periods reduce or interrupt the generation of electricity by solar panels. Likewise, during periods when wind is slower or non-existent, generation of electricity by wind turbines is reduced or interrupted. Additionally, utilities may offer discounts to customers that can be flexible in their consumption demands during peak hours when electricity production or grid capacity are stressed. Storing energy can shift some consumption of energy from external sources (e.g., grid, solar, wind or the like) away from hours during which energy is more expensive (e.g., peak grid hours) or of limited availability (e.g., dark hours for solar or still hours for wind). Reducing external energy needs during peak grid hours also has the added benefit of encouraging stability of the grid. Commercially, however, it is typically important for a chemical plant to maintain consistent throughput, even during periods when external energy needs are reduced-i.e., even when drawing relatively less electricity from external sources.
US 2015/267566 A1 discloses combined cycle power plants with latent heat of fusion thermal energy storage. US 2016/024973 A1 discloses a thermal energy storage system including one or more components from a Rankine Cycle power plant such as steam turbine and other equipment. US 9534508 B2 discloses an energy power plant for utilizing thermal energy to generate electric power, which is also suitable for converting electrical energy into thermal energy. US 2014/366536 A1 discloses a thermal energy storage in a grid-connected CSP generation plant.

### SUMMARY

The present systems and methods utilize phase change material (PCM) to release thermal energy to run or supplement heating cycles in chemical processes for chemical plants, for example in combination with evaporators(s) or heater(s) that are that are powered by electricity (as opposed to burning fossil fuels).

A PCM is "charged" by adding thermal energy from a heat source to transition the PCM from a first (e.g., solid) state to a higher-enthalpy second (e.g., liquid) state, such that the PCM can be then be "discharged" by releasing thermal energy to the heating cycle to reduce the instantaneous external power (e.g., from electricity or combustion of fossil fuels) that is required by the heating cycle. For example, the PCM can be used to reduce external power requirements during periods when electricity from renewable energy sources is less available or not available (e.g., during periods of reduced sunlight for solar power sources, or reduced wind for wind power sources), or when electricity from a power grid is more expensive or not available (e.g., during peak hours, when a utility requests reduced consumption for grid stability, or during grid outages). In the present invention, the present systems and uses are configured with a total mass/volume of PCM that is large enough to require at least 2 MWh (e.g., greater than any one of or between any two of: 2 MWh, 5 MWh, 10 MWh, 20 MWh, 25 MWh, 50 MWh, 100 MWh, 150 MWh, 200 MWh, and/or 500 MWh) to transition from the first state to the second state. Such uses of PCMs are believed to have not previously been used for heating in chemical processes in chemical plants due at least in part to the massive energy requirements of such chemical processes, and the predominant use of fossil fuels for which significant fluctuations in supply or costs are less prevalent than for electricity (especially electricity from renewable sources). The magnitude of such energy requirements has traditionally not only been cost prohibitive, but have also been hampered by the technical challenges inherent in using PCM to "store" such large amounts of energy.

Once heated and thereby liquefied, the PCM can then release thermal energy to a chemical process that would have otherwise required further operation of heater(s) and/or evaporator(s) to continue to drive a heating cycle for the chemical process. As such, the initial addition of thermal energy to the PCM effectively "stores" the power that would have otherwise been required to run the heating cycle for the chemical process during the period when the PCM is being "discharged" by releasing thermal energy to the chemical process.

When, for example, a chemical plant draws power from an electrical grid, differences in the price of electricity at different times of the day can make it advantageous to draw more power from the grid to both (a) run heaters(s), heat pump(s), and/or evaporator(s) in a heating cycle for a chemical process and (b) charge a PCM during non-peak hours (when electricity is less expensive), and then to draw less power from the grid during peak hours (when electricity is more expensive) by using the PCM to release thermal energy to the chemical process instead of or in combination with the heater(s), heat pump(s), and/or evaporator(s) that may be used exclusively in the heating cycle during non-peak hours. In some configurations, heater(s), heat pump(s), and/or evaporator(s) in the heating cycle for the chemical process may be larger than required for the instantaneous operation of the chemical process such that the heater(s), heat pump(s), and/or evaporator(s) may be used both for the chemical-process heating cycle and for a PCM heating cycle to charge the PCM. In other configurations, one or more separate heater(s), heat pump(s), and/or evaporator(s) may be used for a distinct PCM heating cycle that is used when charging the PCM.

The invention is defined by the system of claim 1 and the method of claim 10. The present methods and systems are usable with any chemical process heating loop within the working temperature range of a particular PCM. For example, the present methods and systems can be beneficial for use in distillation systems, especially those with narrow boiling ranges (such as propylene/propane (C3) splitters, deethanizers, depropanizers, debutanizers, isobutene/isobutane splitters, 1-butene fractionators, deisobutanizers, deisopentanizers, C5 splitters, C6 fractionators, naphtha splitters, benzene/toluene fractionators, process water strippers, and acid gas strippers), as well as process heaters, endothermic chemical reactions, equipment heat tracing in above-ambient process operations, boiling, solvent evaporation, and (process and/or utility) steam generation.

While conventional fossil fuel sources of energy may be used for heating, the external source of energy used in the present systems and methods preferably is or includes electricity from a renewable energy source or non-CO₂ emitting energy source. Examples include wind turbines, photovoltaics, thermal solar, hydroelectric, geothermal, nuclear, or any other non-CO₂ emitting source or reduced-CO₂ emitting source (reduced relative to a conventional fossil fuel source). Combinations of energy sources, either by actual connection or by contract may be utilized. For example, direct solar thermal energy may be used instead of an electric heater, and/or direct mechanical work input (e.g., shaft work from a water turbine) may be used instead of an electric motor driven heat pump.

Described and not claimed *per se* are systems for storing and releasing thermal energy for heating in a process of a chemical plant, the system comprises: a contained volume of phase change material (PCM); a heat source configured to transfer thermal energy to the PCM; and a heat-exchange system configured to communicate thermal energy from the PCM to the process; where the PCM is configured to transition from a first (e.g., solid) state to a higher-enthalpy second (e.g., liquid) state at a transition temperature that is equal to or above a utility temperature for the process; and where the PCM requires at least 2 MWh (e.g., greater than any one of or between any two of: 2 MWh, 5 MWh, 10 MWh, 20 MWh, 25 MWh, 50 MWh, 100 MWh, 150 MWh, 200 MWh, and/or 500 MWh) to transition from the first state to the second state.

In some of the systems, the heat-exchange system comprises a heating circuit configured to circulate a heat-transfer fluid in thermal communication with the PCM such that the heat-transfer fluid absorbs thermal energy from the PCM and transfers at least a portion of the absorbed thermal energy to the process.

In some of the systems, the heat source comprises an electric heater. Some such systems are configured to alternate between a charge cycle during which the electric heater provides thermal energy to the process and a discharge cycle during which the heat-exchange system transfers thermal energy from the PCM to the process. In some such systems, during the charge cycle the electric heater provides thermal energy to both the PCM and to the process.

In some of the systems, the heat source comprises a heat pump. In some such systems, the heat pump is configured to receive waste energy from the process or a different process in the chemical plant. Some such systems further comprise: an electric heater configured to provide thermal energy to the process; where the system is configured to alternate between a charge cycle during which the electric heater provides thermal energy to the process, and a discharge cycle during which the heating circuit transfers thermal energy from the PCM to the process.

In some of the systems, the heat source configured to transfer thermal energy to the PCM is a first heat source, and the system further comprises a second heat source configured to transfer thermal energy to the chemical process.

Described and not claimed *per se* are methodsof storing and releasing thermal energy for heating in process of a chemical plant, the method comprises: during a discharge cycle, circulating a heat-transfer fluid in thermal communication with a phase-change material (PCM) such that the heat-transfer fluid absorbs thermal energy from the PCM and transfers at least a portion of the absorbed thermal energy to the process; where the PCM is configured to transition from a first (e.g., solid) state to a higher-enthalpy second (e.g., liquid) state at a transition temperature that is above an uppermost working temperature of the process; and where the PCM is configured to transfer at least 2 MWh (e.g., greater than any one of or between any two of: 2 MWh, 5 MWh, 10 MWh, 20 MWh, 25 MWh, 50 MWh, 100 MWh, 150 MWh, 200 MWh, and/or 500 MWh) of energy to the heat-transfer fluid during a single discharge cycle.

Some of the methods further comprise: during a charge cycle, transferring thermal energy from a heat source to the heat transfer fluid. In some such methods, a 24-hour period includes one or more discharge cycles lasting a total 2-22 hours, and one or more recharge cycles lasting a total of 2-22 hours. In some such methods, the lengths of the charge and discharge cycles are adjusted or selected in response to a request from a power grid operator to reduce consumption of electric power. In some such methods, the lengths of the charge and discharge cycles are selected to reduce the total cost of electricity to continuously run the process over the 24-hour period, taking into account variations in the price of electricity over the 24-hour period. In some such methods, the initiation and length of operation of the discharge cycle are determined in response to a temporary outage of at least one source of electricity to the process.

According to claim 1, a system for storing and releasing thermal energy for heating in a chemical process of a chemical plant comprises a chemical plant for producing a molecular product; a contained volume of phase change material (PCM); and a heat-exchange system configured to communicate thermal energy from the PCM to one or more of a chemical reactant, a chemical intermediate, or the molecular product in the chemical plant; where the PCM is configured to transition from an first state to a higher-enthalpy second state at a transition temperature that is equal to or above a process temperature for the chemical reactant, the chemical intermediate or the molecular product; and where the PCM requires at least 2 MWh to transition from the first state to the second state.

In certain embodiments, thermal energy may be transferred from one or more of the chemical reactant, the chemical intermediate, or the molecular product to the PCM. The heat-exchange system may include a heating circuit configured to circulate a heat-transfer fluid in thermal communication with the PCM such that the heat-transfer fluid may absorb thermal energy from the PCM and may transfer at least a portion of the absorbed thermal energy to one or more of the chemical reactant, the chemical intermediate, or the molecular product. The heat source may include an electric heater. The system may be configured to alternate between a charge cycle during which the electric heater provides thermal energy to one or more of the chemical reactant, the chemical intermediate, or the molecular product and a discharge cycle during which the heat-exchange system transfers thermal energy from the PCM to one or more of the chemical reactant, the chemical intermediate, or the molecular product. During the charge cycle the electric heater may provide thermal energy to both the PCM and to one or more of the chemical reactant, the chemical intermediate and the molecular product.

In certain embodiments, the heat source may include a heat pump, where the heat pump may be configured to receive waste energy from a chemical reaction or a different process in the chemical plant.

In certain embodiments, a material production rate of the chemical plant may be maintained at a constant level regardless of whether the PCM is in the first state or the second state.

Certain embodiments may include an electric heater configured to provide thermal energy to the chemical process in the chemical plant; where the system is configured to alternate between a charge cycle during which the electric heater provides thermal energy to one or more of the chemical reactant, the chemical intermediate, or the molecular product , and a discharge cycle during which the heating circuit transfers thermal energy from the PCM to one or more of the chemical reactant, the chemical intermediate, or the molecular product.

In certain embodiments, the heat source may be configured to transfer thermal energy to the PCM is a first heat source, and the system further comprises a second heat source configured to transfer thermal energy to a chemical process in the chemical plant.

According to claim 10, a method of storing and releasing thermal energy for heating in process of a chemical plant comprises: converting a chemical reactant to a molecular product; during a discharge cycle, circulating a heat-transfer fluid in thermal communication with a phase-change material (PCM) such that the heat-transfer fluid absorbs thermal energy from the PCM and transfers at least a portion of the absorbed thermal energy to one or more of the chemical reactant, a chemical intermediate, or the molecular product; where the PCM is configured to transition from a first state to a higher-enthalpy second state at a transition temperature that is above a process temperature of one or more of the chemical reactant, the chemical intermediate, or the molecular product, which in some situations may be an uppermost working temperature and in other situations may be a utility temperature, of one or more of the chemical reactant, the chemical intermediate, or the molecular product; and where the PCM is configured to transfer at least 2 MWh of energy to the heat-transfer fluid during a single discharge cycle.

In certain embodiments, during a charge cycle, transferring thermal energy from a heat source to the heat transfer fluid. A 24-hour period may include one or more discharge cycles lasting a total 2-22 hours, and one or more recharge cycles lasting a total of 2-22 hours. The lengths of the charge and discharge cycles may be adjusted or selected in response to a request from a power grid operator to reduce consumption of electric power. The lengths of the charge and discharge cycles may be selected to reduce the total cost of electricity to continuously run the chemical process at a steady material production rate over the 24-hour period, taking into account variations in the price of electricity over the 24-hour period. The initiation and length of operation of the discharge cycle may be determined in response to a temporary outage of at least one source of electricity to the process.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any embodiment of the present apparatuses, kits, and methods, the term "substantially" may be substituted with "within [a percentage] of" what is specified, where the percentage includes 0.1, 1, 5, and/or 10 percent.

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, an apparatus or kit that "comprises," "has," "includes" or "contains" one or more elements possesses those one or more elements, but is not limited to possessing only those elements. Likewise, a method that "comprises," "has," "includes" or "contains" one or more steps possesses those one or more steps, but is not limited to possessing only those one or more steps.

Further, an apparatus, device or system that is configured in a certain way is configured in at least that way, but it can also be configured in other ways than those specifically described.

Any embodiment of any of the present apparatuses and methods can consist of or consist essentially of - rather than comprise/include/contain/have - any of the described steps, elements, and/or features. Thus, in any of the claims, the term "consisting of" or "consisting essentially of" can be substituted for any of the open-ended linking verbs recited above, in order to change the scope of a given claim from what it would otherwise be using the open-ended linking verb.

Details associated with the embodiments described above and others are presented below.

Some details associated with the aspects of the present disclosure are described above, and others are described below. Other implementations, advantages, and features of the present disclosure will become apparent after review of the entire application, including the Brief Description of the Drawings, Detailed Description, and the Claims.

### BRIEF DESCRIPTION OF THE DRAWINGS

The following drawings illustrate by way of example and not limitation. For the sake of brevity and clarity, every feature of a given structure is not always labeled in every figure in which that structure appears. Identical labels or reference numbers do not necessarily indicate an identical structure. Rather, the same reference number may be used to indicate a similar feature or a feature with similar functionality, as may non-identical reference numbers. Dimensioned figures are drawn to scale (unless otherwise noted), meaning the sizes of the depicted elements are accurate relative to each other for at least the embodiment depicted in the figures.
**FIG. 1** depicts a flowchart of an example of the present methods.
**FIGs. 2A** and **2B****,** respectively, depict a conceptual block diagram of a first example of the present PCM energy storage Systems in combination with a chemical process, during charge and discharge cycles.
**FIGs. 3A** and **3B****,** respectively, depict a conceptual block diagram of a second example of the present PCM energy storage systems in combination with a chemical process, during charge and discharge cycles.
FIGs. 4A and 4B, respectively, depict a conceptual block diagram of a third example of the present PCM energy storage systems in combination with a chemical process, during charge and discharge cycles.
FIGs. 5A and 5B, respectively, depict a conceptual block diagram of a third example of the present PCM energy storage systems in combination with a chemical process, during charge and discharge cycles.
FIG. 6 depicts a composite curve conceptually illustrating the waste heat available for upgrade from a chemical process.
FIG. 7 depicts a block diagram conceptually illustrating the use of a heat pump to upgrade waste heat from a chemical process.
FIG. 8 depicts a block diagram conceptually illustrating the use of heat engines to leverage waste heat from a chemical process.
FIGs. 9A and 9B depict composite curves conceptually illustrating the use of high temperature process heat to charge PCM, in charging and discharging states respectively.
FIGs. 10A and 10B depict examples of encapsulated PCM configurations.
FIG. 11 depicts a schematic process diagram of one example of a conventional C4 splitter distillation column.
FIG. 12 depicts a schematic process diagram of another example of the C4 splitter distillation column of FIG. 11 implemented with a conventional heat pump.
FIG. 13 depicts a schematic process diagram of another example of the C4 splitter column of FIG. 12 implemented with a heat pump and a PCM energy storage system.
FIGs. 14A and 14B depict schematic process diagrams of an additional example of the present PCM systems that uses high temperature process heat to charge the PCM, showing charging and discharging flows, respectively.

### DETAILED DESCRIPTION

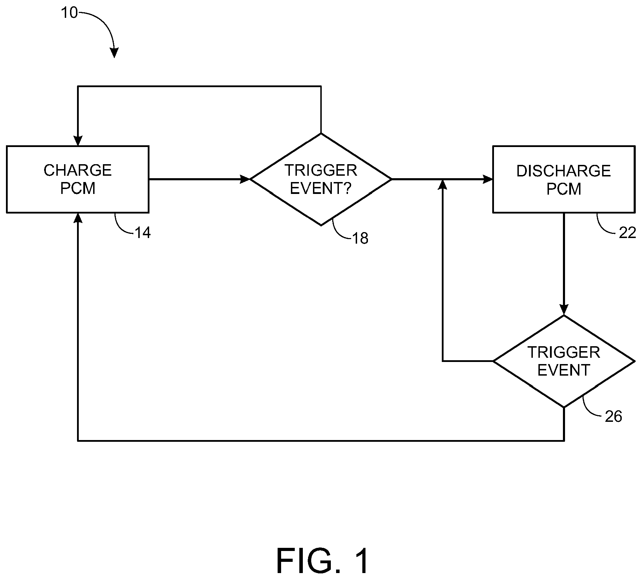

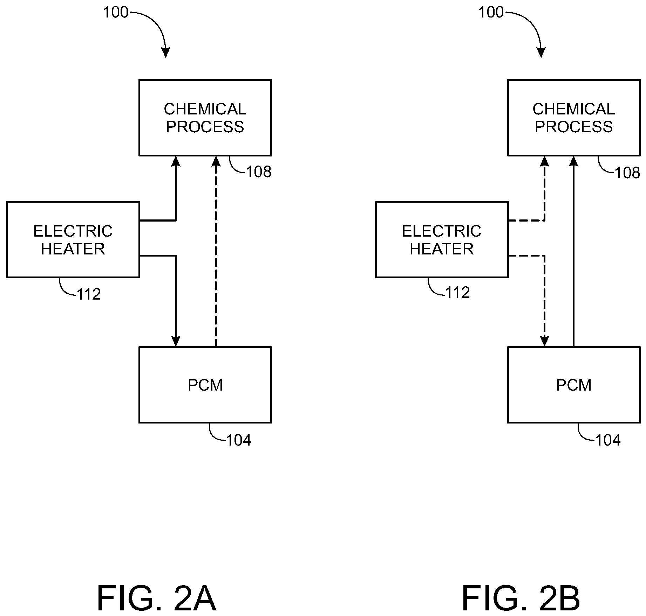

Referring now to the drawings, and more particularly to FIGs. 1 and 2A-2B, FIG. 1 depicts a flowchart of one example 10 of the present methods of using phase change material for a heating cycle in a chemical process of a chemical plant, and FIGs. 2A and 2B depict conceptual block diagrams of an example of such PCM energy storage system 100 with PCM 104 in combination with a chemical process 108 in a chemical plant during a charge cycle (FIG. 2A) and a discharge cycle (2B). In some implementations, the method or process depicted in FIG. 1 is implemented by a digital controller such as a processor that executes instructions from memory to implement the steps described below with reference to FIG. 1. In the example of FIGs. 2A and 2B, a common electric heater 112 (e.g., with one or more electric heater(s) that is/are larger than otherwise needed for the chemical process alone) provides thermal energy to both operate the chemical process 108 and to charge the PCM 104.

As used herein, "chemical plant" means a manufacturing process to produce a desired molecular product. Non-limiting examples of chemicals may include, but are not limited to, ammonia, methanol, hydrogen, ethylene, propylene, higher hydrocarbon chain length alkenes, ethylene glycol, butadiene, MTBE, benzene, para-xylene, phenol, bisphenol-A, ethanol and higher alcohols, acetic acid and higher hydrocarbon acids (e.g. terephthalic acid), and polymers thereof. The output of the chemical plant may be a material product. Chemical plants are distinct from power production facilities or energy co-operatives. While a chemical plant may produce certain quantities of power, they also produce a desired molecular product as described above. As used herein, power is not considered a "material product" or a "molecular product".

To optimize chemical plant profitability, it is generally best to maximize the utilization of the core of the plant itself by maintaining the maximum product output, as often as possible, which overall maximizes the capital efficiency and economics of the plant. Chemical plants also may have certain technical aspects, such as operating windows for reactors, distillation columns, and other unit operations that limit the flexibility in adjusting the production rate or have large consequential penalties for deviating from an optimal design. For example, safety protocols and equipment protection procedures may require a day or more to recover the plant to full operations after even a short duration temporary shutdown. Therefore, one objective of this invention is to operate a chemical plant at a constant or substantially constant output (material production rate) in the event of varying or selectable energy inputs. In contrast, power generation systems may utilize certain types of energy storage, but for the purpose of extending the duration of the energy system or time-shifting the output of the energy delivery system by modulating the total output over time. In these cases, the process output (e.g., electricity or heat) is varied. In embodiments of the present invention, however, the material output from the process may be maintained at a design constant rate. For commercial chemical plants the amount of energy stored needs to be of a sufficient amount.

In an initial step 14, PCM 104 is "charged" by adding thermal energy to the PCM. In at least some implementations, sufficient amounts of thermal energy are added to liquefy at least some of the PCM-e.g., to transition the PCM from a solid state to a liquid state. As indicated by the solid arrows in FIG. 2A, during charging of the PCM, thermal energy is added to PCM 104 and to chemical process 108 using common electric heater 112. The dashed arrow in Fig. 2A indicates an optional mode where thermal energy is transferred from PCM 104 to chemical process 108 when the PCM is being charged.

At a step 18, the method involves determining whether a discharge trigger event has occurred. Such a discharge trigger event can be or include, for example, reaching a time at which PCM 104 is scheduled to be "discharged" by releasing thermal energy to chemical process 108, receiving a request from an operator of a power grid to reduce power consumption from the grid, observing a significant increase in the instantaneous cost of electrical energy supplied from the grid, a predictive model indicating future significant increase in the cost of electrical energy, or detecting an interruption of power from the grid or from local sources (e.g., renewable sources or combustion of fossil fuels). If a discharge trigger event has not occurred, then the process may include determining whether the PCM is fully charged and, if not, reverting to step 14 to continue charging the PCM. In some implementations, the process includes adjusting the rate at which the PCM is charged (i.e., the rate at which thermal energy is added to the PCM) based on the level of "charge" of the PCM. For example, the rate at which thermal energy is added to the PCM may be slowed as the PCM approaches a fully charged state. In some implementations, if the PCM is fully charged, then the liquefied or "charged" state of the PCM is maintained by continuing to add thermal energy to the PCM at a rate approximating the rate at which the PCM releases thermal energy to the environmental (e.g., due to inherent limitations of thermal insulation).

If instead a discharge trigger even has occurred, the method proceeds to a step 22 at which the PCM is discharged via release of thermal energy to the chemical process (e.g., via a fluid that is circulated in thermal communication with the chemical process and with the PCM). As indicated by the solid arrow in FIG. 2B, thermal energy from PCM in 104 is used for heating in chemical process 108. Electric heater 112 can, in at least some instances or implementations, be shut down entirely such that all heating for the chemical process is provided via the PCM's release of thermal energy to the chemical process. In some implementations, such transfer of thermal energy from the PCM to the chemical process can be direct (e.g., passing a fluid of the chemical process in direct thermal communication with the PCM) or indirect (e.g., passing the fluid of the chemical process in thermal communication with a heat-transfer fluid that is, in turn, passed in direct thermal communication with the PCM). In this context, "direct thermal communication" means that there is not an intervening heat-transfer fluid, and does not preclude thermal communication through intervening physical structures such as, for example, conduits for directing flow of process or heat-transfer fluids or through the walls of containers in which the PCM is disposed.

At a step 26, the method involves determining whether a charge trigger event has occurred. Such a charge trigger even can be or include, for example, reaching a time at which PCM 104 is scheduled to be "charged" by adding thermal energy to the PCM, receiving an indication from an operator of a power grid that higher power consumption from the grid can be resumed or the expiration of a period during which the operator requested reduced power consumption, observing a significant decrease in the instantaneous cost of electrical energy supplied from the grid, a predictive model indicating future significant decrease in the cost of electrical energy, or detecting the resumed availability of power from the grid or from local sources (e.g., renewable sources or combustion of fossil fuels). If a charge trigger event has not occurred, then the process may include determining whether the PCM is fully discharged and, if not, reverting to step 22 to continue discharging the PCM. In some implementations, when sufficient power is available (even if at a higher price), the process includes operating the electric heater 112 at a reduced rate (relative to full or desired rate when running the chemical process and discharging the PCM at a full or desired rate) to add thermal energy to chemical process 108, to PCM 104, or to both the chemical process and the PCM based (as indicated by the dashed arrows in FIG. 2B), for example, based on the level of "discharge" of the PCM and/or on the amount or cost of power available from the grid or other sources. For example, the rate at which thermal energy is released from the PCM to the chemical process may be slowed as the PCM approaches a fully discharged state. In some implementations, if the PCM is fully charged and power is available from other sources (even if at a higher price), then heater 112 is operated solely to run the chemical process without charging the PCM. If a charge trigger event has occurred and sufficient power is available from the grid or other sources, then the method reverts to step 14 at which the PCM is charged, either at a full or desired charging rate; or, if more power is available than is needed to run the chemical process but not enough power to also charge the PCM at the full or desired charging rate, then the PCM is charged at a reduced rate (relative to a full or desired charging rate).

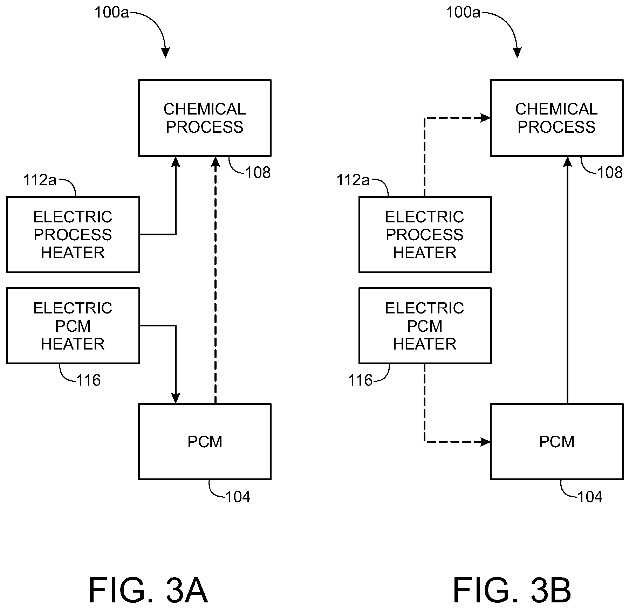

FIGs. 3A and 3B, respectively, depict a conceptual block diagram of an alternate configuration 100a of the present PCM energy storage systems in combination with a chemical process, during charge and discharge cycles. The operation of configuration 100a is substantially similar to that of configuration 100 (FIGs. 2A-2B), with the primary exception being that configuration 100a includes an additional electric PCM heater 116 with its own one or more heater(s). As such, at step 14 of the method depicted in FIG. 1, when implemented via configuration 100a, heater 112a adds thermal energy to chemical process 108, and PCM heater 116 adds thermal energy to PCM 104 to charge the PCM. Likewise, at step 22 of the method depicted in FIG. 1, the PCM is discharged via release of thermal energy from the PCM to chemical process 108, as indicated by the solid arrow in FIG. 3B. Additional process heat may optionally be provided by process heater 112a as shown by the dashed line in FIG. 3B. Process heater 112a and PCM heater 116 can, in at least some instances or implementations, be shut down entirely such that all thermal energy for the chemical process is provided via the PCM's release of thermal energy to the chemical process and such that thermal energy is not simultaneously being added to the PCM. As described above for configuration 100 of FIGs. 2A-2B, in some implementations, such transfer of thermal energy from the PCM to the chemical process can be direct (e.g., passing a fluid of the chemical process in direct thermal communication with the PCM) or indirect (e.g., passing the fluid of the chemical of process in thermal communication with a heat-transfer fluid that is, in turn, passed in direct thermal communication with the PCM).

As described above for configuration 100 of FIGs. 2A-2B, for configuration of 100a, in some implementations, when sufficient power is available (even if at a higher price), the method includes operating process heater 112 at a reduced rate (relative to full or desired rate when running the chemical process solely with the electric heater) to add thermal energy to chemical process 108, operating PCM heater 116 at a reduced rate (relative to full or desired rate when charging the PCM at a full or desired rate) to add thermal energy to PCM 104, and/or both running the process heater at a reduced rate and running the PCM heater at a reduced rate (as indicated by the dashed arrows in FIG. 3B). In some implementations, if the PCM is fully discharged and power is available from other sources (even if at a higher price), then only process heater 112 is operated to run the chemical process without running PCM heater 116 to charge the PCM.

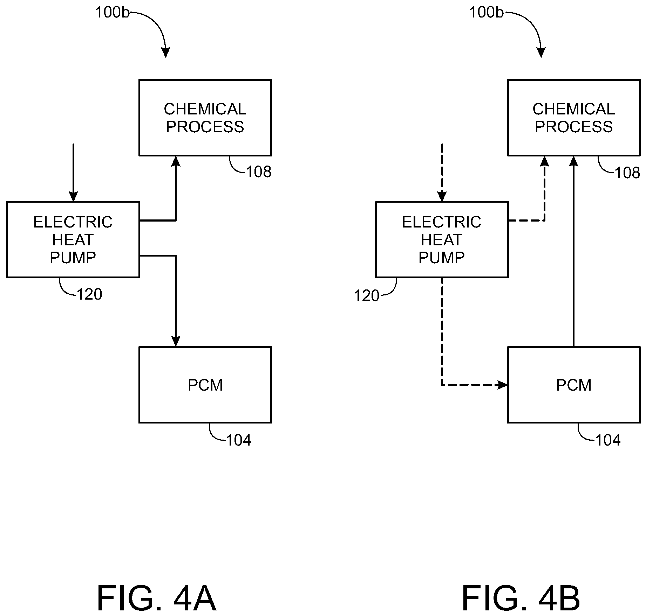

FIGs. 4A and 4B, respectively, depict a conceptual block diagram of an alternate configuration 100b of the present PCM energy storage systems in combination with a chemical process, during charge and discharge cycles. The operation of configuration 100b is substantially similar to that of configuration 100 (FIGs. 2A-2B), with the primary exception being that configuration 100b utilizes an electric heat pump 120 instead of an electric heater. As such, at step 14 of the method depicted in FIG. 1, when implemented via configuration 100b, heat pump 120 adds thermal energy to chemical process 108 and to PCM 104 to charge the PCM. Likewise, at step 22 of the method depicted in FIG. 1, the PCM is discharged via release of thermal energy from the PCM to chemical process 108, as indicated by the solid arrow in FIG. 4B. Additional process heat may optionally be provided during discharge of the PCM by heat pump 120, as shown by the dashed arrow from heat pump 120 to chemical process 108 in FIG. 4B. During discharge of PCM 104, heat pump 120 can, in at least some instances or implementations, be shut down entirely such that all heating for the chemical process is provided via the PCM's release of thermal energy to the chemical process and such that thermal energy is not simultaneously being added to the chemical process by the heat pump. As described above for configuration 100 of FIGs. 2A-2B, in some implementations, such transfer of thermal energy from the PCM to the chemical process can be direct (e.g., passing a fluid of the chemical process in direct thermal communication with the PCM) or indirect (e.g., passing the fluid of the chemical process in thermal communication with a heat-transfer fluid that is, in turn, passed in direct thermal communication with the PCM). As indicated by the arrow in FIG. 4A (and the corresponding dashed arrow in FIG. 4B), heat pump 120 can receive waste heat (excess thermal energy at a temperature that is too low to directly reuse) from the chemical process or other source(s) external to the chemical process, and upgrade that waste heat to a temperature at which the corresponding thermal energy can be used to charge the PCM.

The use of a heat pump to upgrade waste heat to a temperature that is useable to provide thermal energy to the chemical process and to charge the PCM can be operated with a lower electricity requirement than an electric heater due to the coefficient of performance of the heat pump. For example, the heat pump can be staged at different temperature levels to account for the temperature differentials needed to heat the process versus heating the PCM, each of which requires a temperature that is higher than the temperature of the chemical process at which thermal energy is delivered to the process, and higher than the temperature of the PCM when thermal energy is added to the PCM.

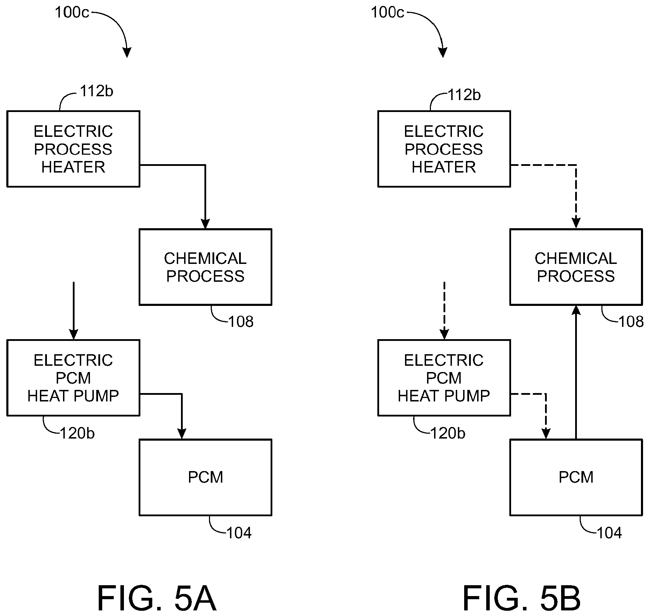

FIGs. 5A and 5B, respectively, depict a conceptual block diagram of an alternate configuration 100c of the present PCM energy storage systems in combination with a chemical process, during charge and discharge cycles. The operation of configuration 100c is substantially similar to that of configuration 100a (FIGs. 3A-3B), with the primary exception being that configuration 100c utilizes an electric PCM heat pump 120b instead of an electric heater to charge the PCM. As such, at step 14 of the method depicted in FIG. 1, when implemented via configuration 100c, heater 112b adds thermal energy to chemical process 108, and PCM heat pump 120b adds thermal energy to PCM 104 to charge the PCM. As indicated by the arrow to heat pump 120b, heat pump 120b can receive waste heat (excess thermal energy at a temperature that is too low to directly reuse) from the chemical process or other source(s) external to the chemical process, and upgrade that waste heat to a temperature at which the corresponding thermal energy can be used to charge the PCM.

Likewise, at step 22 of the method depicted in FIG. 1, the PCM is discharged via release of thermal energy from the PCM to chemical process 108, as indicated by the solid arrow in FIG. 5B. Additional process heat may optionally be provided by process heater 112b as shown by the dashed line from heater 112b to chemical process 108 in FIG. 3B. Process heater 112b and PCM heat pump 120b can, in at least some instances or implementations, be shut down entirely such that all thermal energy for the chemical process is provided via the PCM's release of thermal energy to the chemical process and such that thermal energy is not simultaneously being added to the PCM. In some instances, the application of the electric process heater 112b and the electric PCM heat pump 120b can be exchanged or swapped, such that a heat pump (rather than the electric heater) is primarily used to heat the chemical process, and an electric heater (rather than a heat pump) is primarily used to charge the PCM. The choice of configuration will depend on the amount of waste heat and its temperature level relative to the process energy demand and the expected power availability and pricing profiles of electricity. As described above for configuration 100 of FIGs. 2A-2B, in some implementations, such transfer of thermal energy from the PCM to the chemical process can be direct (e.g., passing a fluid of the chemical process in direct thermal communication with the PCM) or indirect (e.g., passing the fluid of the chemical of process in thermal communication with a heat-transfer fluid that is, in turn, passed in direct thermal communication with the PCM). As indicated by the dashed arrow to heat pump 120b, heat pump 120b can optionally also receive waste heat from the chemical process or other source(s) external to the chemical process, during discharge of the PCM and upgrade that waste heat to a temperature at which the corresponding thermal energy can be used to charge the PCM. The waste heat may originate from the chemical process or from an external process, not pictured in the diagram.

While the process example of FIG. 1, and the system examples of FIGs. 2A-2B, 3A-3B, 4A-4B and 5A-5B utilize a single PCM, the present methods and system can include multiple PCMs (e.g., at different temperatures), for example, two PCMs with different freezing temperatures, or three PCMs with three different freezing temperatures, for example to provide staged heating for different process services. Although Figures 2-5 show a single arrow for the delivery of process heat (thermal energy) from PCM 104 to a single chemical process 108, process heat may be delivered from the PCM to multiple chemical processes and/or other heat uses. For example, the process heat may be supplied to different processes or uses in more than one location of a plant, even at different use temperatures (within the limits of the PCM heat supply, electric heater supply, or heat pump supply). Furthermore, thermal energy stored in the PCM may also be exported beyond the boundaries of a chemical plant to other energy consumers such as other chemical plants located nearby. Although the system examples of Figs 4A-4B and 5A-5B show a single heat pump, each may include a cascaded heat pump raising different portions of the upgraded heat to different temperature levels or multiple heat pumps from heat of a plurality of input temperatures to a plurality of output temperature levels to match both the supply heat availability and the process heating demands.

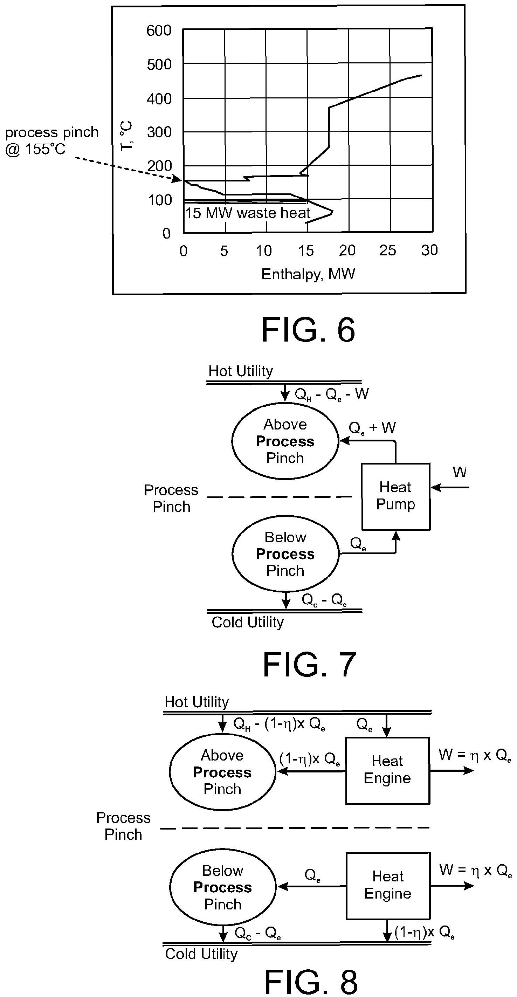

FIGs. 6 and 7 help illustrate the operation of heat pumps in the present systems and methods. FIG. 6 depicts a grand composite curve conceptually illustrating the waste heat available for upgrade from a chemical process, and FIG. 7 depicts a block diagram conceptually illustrating the use of a heat pump to upgrade waste heat from a chemical process. Specifically, FIG. 6 depicts a grand composite process heating and cooling curve that represents the net heat input into the process and at what temperatures the heat is required. As shown, such processes typically have a "pinch temperature", the value of which is unique to the process and depending on the reasonable limits of heat transfer (i.e., minimum temperature driving force for heat transfer) that arise in the process. At the pinch temperature, there is zero net heating and cooling demand. Just above the pinch temperature, all of the heat coming from "hot streams" (items that need to release thermal energy or be cooled down in the process), can be totally absorbed by the "cold streams" (items that need to absorb thermal energy or be heated up). Further above the pinch temperature, additional heat or thermal energy is needed to satisfy the total heating demand of the process. Below the pinch temperature, there is excess heat or thermal energy that needs to be removed from hot streams than can be absorbed by cold streams and, thus, a net cooling utility demand is required below the pinch temperature. Thermal energy removed below the pinch temperature is at temperatures too low to be able to be used above the pinch temperature where the net heating demand exists. This heat or thermal energy removed below the pinch temperature may be referred to in the art as "waste heat" because it cannot be directly utilized within the process. Such waste heat is typically therefore used, if at all, by exporting the waste heat to a neighboring chemical plant or process. Most commonly, in prior art systems, waste heat has been rejected to ambient temperature in the environment.

The example of FIG. 6 includes 15 MW of waste heat from below the pinch temperature of 155 °C; if that waste heat is upgraded to over 200°C using a heat pump, the net utility requirement of the process can be offset by 15 MW. A heat pump, conceptually shown in FIG. 7, can make utilization of waste heat feasible within a process. Heat pumps are known in the art and can be based on vapor compression, thermoelectrics, pressure-sensitive chemical reactions, and the like. Work energy input into the heat pump acts to upgrade the waste heat to a temperature that is high enough to be used by the process. Specifically, the heat pump effectively upgrades waste heat from below the pinch temperature to above the pinch temperature. In the present systems and methods utilizing PCM, the waste heat is upgraded to a high enough temperature that it can be transferred to a PCM heat storage system and subsequently to the process. Additionally, the storage provided by the PCM effectively decouples the timing of using the upgraded waste heat from the act of upgrading that waste heat, meaning the waste heat can be upgraded and the PCM charged when electricity is available and, optionally, less expensive.

In practice, the energy put into the heat pump is typically also available at the usable (upgraded) temperature and can thereby also be used to provide thermal energy to the process. Examples of sources of waste heat in chemical processes include quench water cooling in ethylene plants, distillation column overhead condensers, cycle gas coolers in polyolefins plants, excess or vented steam from user-constrained steam systems (usually with heat and power integration), product rundown coolers, low temperature reactor coolers in BPA, oxo-alcohol processes, and Methyl Tertiary Butyl Ether (MTBE) processes, among others. Additionally, such waste heat can be sourced from a single stream or aggregated from multiple waste heat sources. The waste heat utilized by the heat pump can be sourced from the same chemical process or from another process.

FIG. 8 depicts a block diagram conceptually illustrating the use of heat engines to leverage waste heat from a chemical process. In some configurations of the present systems and methods, such heat engines can be used in concert with PCM and heat pumps. For example, the heat pump can supply thermal energy to charge the PCM according to whether the heat originates either above or below the process pinch temperature. Heat engines can be included to utilize thermal energy flowing to or from the PCM to generate power, with flow direction depending on whether a given temperature is above or below the process pinch temperature.

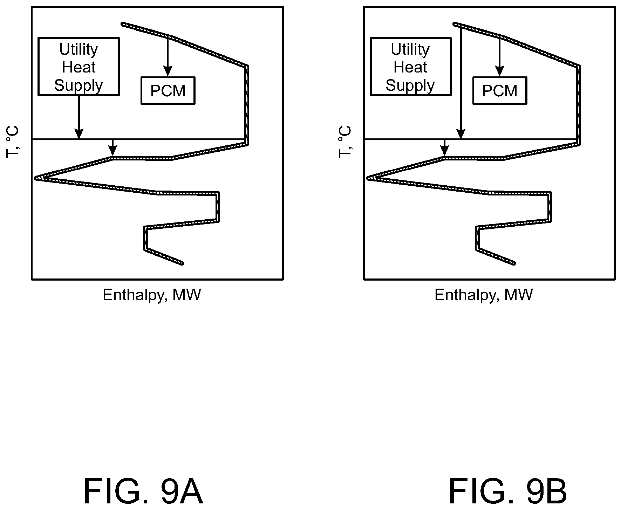

Another way in which the present systems and methods can be implemented is by charging the PCM using high temperature heat generated at a temperature above the freezing point of the PCM by a process within a plant, for example from an exothermic chemical reaction (e.g., ethylene oxidation, oxidative butane dehydration, or other oxidative reactions), high temperature reactor effluent cooler, or from cooling furnace flue gas. While charging the PCM, a low temperature utility heat supply (heat pump or electric heater) provides heat to a chemical process to be driven by the PCM during discharge of the PCM. While discharging the PCM, the available high temperature process heat can be applied to the lower temperature applications in the process; for example, as shown in FIG. 9B, the high-temperature process heat and the thermal energy from discharging the PCM can be simultaneously delivered to the target chemical process. This is illustrated conceptually in the Grand Composite curves shown in FIG. 9A (charging mode) and FIG. 9B (discharging mode). The advantage of this type of implementation is the natural temperature gradients of the chemical process can be used. One benefit is the utility heat supply (e.g., electric heater) can be rated for lower temperature than would otherwise be required for charging the PCM. At some temperatures, this could have equipment cost savings, for example at temperatures where a medium voltage (3,000 to 7,000 V) heater would be challenging and a low voltage (e.g. 1000 V or less) would need to be used to prevent an electrical arc within the system. Low voltage equipment requires more amperage for the same power demand so the wiring and electrical supply items such as additional transformers contribute more to the cost.

### Phase Change Material (PCM)

Phase change materials generally have the ability to absorb or release (preferably large) quantities of heat at specifically targeted temperatures of interest and, for at least some implementations the present systems and methods, preferably with minimal volumetric change. Generally, physical phase transitions of condensed phase materials exhibit this type of behavior. A transition from the solid phase to the liquid phase is one type of transition that typically meets this criteria. However, other transitions can also be utilized in certain implementations of the present systems and methods. For example, some PCMs may change from a solid state to a liquid state in the operating conditions (e.g., temperature) of certain implementations. By way of further example, some PCMs may exhibit other types of phase changes in which the enthalpy changes non-linearly at a particular temperature (or over a particular temperature range), such as from one solid state to another solid state (e.g. change in crystal structure due to molecular rearrangements), from an amorphous state to a solid state, from a gel state to a solid state, from a liquid state to a gel state, or from an amorphous state to a different amorphous state. In a multicomponent mixture, there may or may not also be some compositional shift between one state and another, for example a liquid solution of a solvent and a solute forming a 2:1 solvent and solute compound in the solid phase. To generally describe this without enumerating all the specific phases of the many possible systems, the PCM can be described as transitioning between a first state and a higher-enthalpy second state when heat is added to the PCM and transitioning from the second state to the lower-enthalpy first state when heat is removed from the PCM.

Various materials and mixtures can be used for the PCM, such as, for example, polyaromatics, organic acids, alcohols with aromatic rings, or inorganic mixtures, anthracene (216 °C melting point, heat of fusion of about 30 kJ/mol or 168 kJ/kg), benzoic acid (122 °C melting point, heat of fusion of about 18 kJ/mol or 147 kJ/kg), hexamethylbenzene (165°C, 20.6 kJ/mol, 127 kJ/kg), tetraphenylmethane (1,1',1",1‴-Methanetetrayltetrabenzene) (281°C, 48.3 kJ/mol, 150kJ/kg) triacontane (66°C melting point, heat of fusion 68.8 kJ/mol or 136 kJ/kg); also paraffin wax (melting typically between 46 to 68°C). Various salts can be used in a molten salt solution, such as, for example, potassium nitrate (KNO₃), sodium nitrate (NaNO₃), sodium nitrite (NaNO₂), other Group I and Group II metal halides, Group I and Group II metal nitrates Group I and Group II metal carbonates, Group I and Group II metal sulfates, and mixtures thereof, eutectic salt mixtures such as LiNO3/NaCl (208 °C melting point, heat of fusion of about 369 kJ/kg), various commercially available eutectic salt solutions (e.g., HITEC, from Coastal Chemical, melting point 142°C)), and combinations thereof. Additionally, some configurations of the present PCMs may comprise one or more metals, as they have good volumetric thermal storage density. For example zinc, with melting point of 420°C and heat of fusion of 112 kJ/kg and solid density of 7,140 kg/m³ has a thermal energy storage density of 0.22 MWh/m³ which is similar to the electrical energy storage density of a NiMH battery and slightly higher than that of a Ni-Cd battery. By way of further example, magnesium has a melting temperature of 650°C and heat of fusion of 349 kJ/kg; bismuth has a melting temperature of 272°C and heat of fusion of 54 kJ/kg; and tin has a melting temperature of 232°C and heat of fusion of 59 kJ/kg. Moreover, different PCM components can be mixed in proportions to achieve a desired freezing point for a given heating application. Generally, with binary mixtures there is a freezing point depression as one substance is added in mixture with another pure substance. Eutectic mixtures, congruent melting point mixtures, and mixtures with solid compounds are convenient to use since the composition does not change when the mixture is thawed and frozen. Aqueous mixtures can be used. Magnesium nitrate salt solution can be used as either the hexahydrate form (congruent melting compound around 90°C), Mg(NO₃)₂ and its dihydrate eutectic at 129°C, or the dihydrate and hexahydrate eutectic (melting at 50°C). Sodium hydroxide water eutectic mixture freezes at 62°C. Aqueous organic solutions are more preferable when the amount that is dissolved is strongly dependent on temperature. One example is an aqueous mixture of terephthalic acid and water. When pressure is applied, which prevents water vaporization, the mixture can be used up to 300°C.

There are several options for containment of a PCM in the present systems and methods. First, PCM can be disposed in one or more insulated vessels through which heat-exchange conduits define flowpaths for fluid. The conduits (e.g., tubes, shells, fins, or the link) disposed within the vessel(s) permit heat transfer between a working heat transfer fluid within the conduits or heat exchangers and the PCM within a given vessel (outside the conduits). In at least some configurations, the PCM is stirred or agitated within the vessel(s) to prevent temperature gradients and improve the heat transfer. In this first option, the volume of PCM typically will include more than the minimum needed for a desired thermal capacity, because a consistent liquid phase will typically be required to facilitate stirring or agitation during "discharging" of the PCM to facilitate the consistent transfer of thermal energy out of the PCM. For example, the PCM can be suspended in a liquid (i.e., a slurry when the PCM is in a solid form). The relative proportions of liquid and solid can be designed according to the system needs. For example a relatively large, passive storage system may have continuous and somewhat separated solid and liquid phases. The stirring or agitation system can be configured to control the PCM in a slurry of smaller particles that is easily pumped and transferred to heat transfer equipment, or simply suspended by fluid circulation to homogenize the system with heat storage capacity. In some implementations, the PCM may be present in the form of small, encapsulated beads that contain the PCM in both (e.g., liquid and solid) of its utilized states, for example, such that the beads can be suspended in a liquid with a lower freezing point than the PCM. When the PCM is suspended as a slurry in a solution or as an emulsion (e.g., in a diphenyl oxide/biphenyl blend, or other commercial heat transfer fluid), without the PCM being encapsulated, nucleating agents may be included in the liquid to encourage nucleation during freezing to occur in the solution rather than on heat-transfer surfaces where nucleation can interfere with or inhibit the transfer of thermal energy through those surfaces. Some such systems and methods may include supercooling or subcooling before nucleation/crystallization occurs, in which cases the temperature of the PCM has to be additionally higher than the process temperature by the subcooling amount in order to maintain the heat transfer temperature driving force. Nucleating agents can be beneficial in reducing subcooling required before freezing initiates. Another method to avoid operational performance issues related to subcooling is to maintain enough solid PCM in the system so there is surface area for crystal growth when discharging.

A second option includes containing the PCM in a larger number of relatively smaller, thermally conductive containers (e.g., formed of HDPE, or of aluminum or stainless steel). These containers can be shaped, either individually or in combination with other such containers, to contour to conduits to improve heat transfer between the chemical process stream to be heated or heat transfer fluid and the PCM. For example, with conduits having a circular cross-section like a typical pipe, the containers can include circular passages or semi-circular indentations to contact the conduit. By way of further example, conduits can be shaped to have a relatively flat, rectangular cross-section sized to fit against a planar wall of a container.

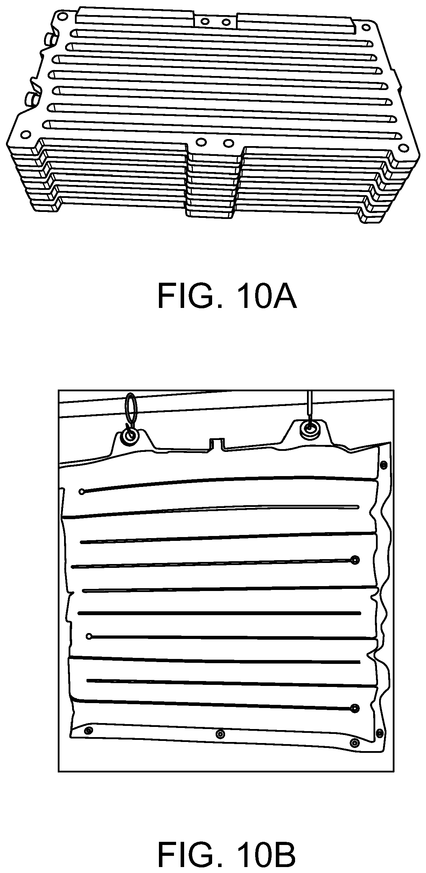

In a third option, the PCM can be contained in multiple plastic or metal enclosures the geometry of which is selected such that these may be stacked or hung (e.g., in parallel) inside the insulated vessel such that the fluid to be heated or heat transfer fluid (when a secondary circuit system is employed) can pass between (and/or through) and in contact with the individual containers to transfer thermal energy between the PCM and the fluid to be heated or heat-transfer fluid through the walls of the containers. This approach provides a large surface area for the transfer of thermal energy. FIG. 10A depicts an example of such a container that is formed of polymer and is substantially rigid to allow multiple containers to be stacked. As shown, the container of FIG. 10A defines a number of grooves to maximize the surface area available for the transfer of thermal energy between the PCM inside the container and the process or heat-transfer fluid outside the container. FIG. 10B depicts another example of such a container that is formed from a polymer and is flexible (like a plastic kitchen bag). As shown, the container of FIG. 10B also defines a number of grooves along which the two sides of the bag structure are joined to define an elongated zig-zag passage to maximize surface area for heat-transfer, provide for ease of bag filling, and to promote even distribution of PCM within the bag structure when the bag structure is hanging in a vessel through which the process fluid or heat-transfer fluid circulates.

The first of these three PCM-containment options has the advantage of smaller overall vessel size, simpler construction, and higher heat transfer rates. The second of these three PCM-containment options offers lower corrosion rates by fully containing the process or heat transfer fluid in conduits and fully containing the PCM in individual containers. And the third of these three PCM-containment options offers advantages of a large heat exchange area in a conveniently-handled form factor.

### Working Fluids in Heat Pumps

Various fluids, vapors, or gases can be used for upgrading waste heat to useful heat for chemical process heating and/or PCM charging and discharging. Examples of such fluids that are suitable for certain implementations of the present methods and systems include ethylene, propylene, ethane, propane, butane, ammonia, hydrocarbons, hydroflourocarbons, hydrochloroflourocarbons, water, hydrogen, nitrogen, helium, argon, air and mixtures thereof. Heat pump cycles can be of known thermodynamic types, such as the Rankine cycle or Stirling cycle (run in the direction to move heat by using input process work). Heat pumps that operate on the principle of using reversible chemical reactions, i.e. chemical heat pumps may also be used. The fluid may also be a solid or polymer, as in some cases of chemical heat pump materials.

### Heat Transfer Fluid

For configurations in which a heat transfer fluid indirectly transfers thermal energy between the PCM and the fluid of a given chemical heating cycle, the heat transfer fluid can include one or more of any components known for such heat-transfer fluids. Suitable heat transfer fluids remain in the liquid phase under the conditions of both the relevant part of the heating cycle and the conditions under which heat transfer occurs between the heat-transfer fluid and the PCM. There are many examples, but some common examples are water, a eutectic mixture of diphenyl oxide and biphenyl (e.g. Dowtherm A), mixtures with well known trade names, like Dowtherm G and Therminol66, as well as materials that are already available within the chemical process. In using a heat transfer fluid, the system can have several process and utility interconnections to provide the overall required energy to the process. Configurations can be implemented that heat the heat transfer fluid with a combination of electric heaters, heat pumps, conventional fired heaters, and process heat recovery. The heat transfer fluid then may be used as a general heating utility within the plant for one or multiple heating applications.

### EXAMPLES

### Example 1: C4 Splitter w/ Electric Heater and PCM

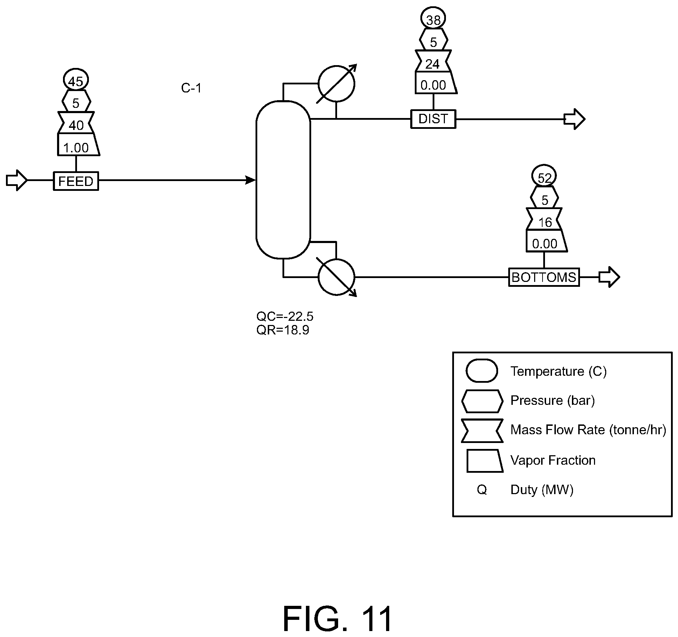

An example was modeled for the use of the present PCM energy storage systems and methods to heating cycles for a C4 splitter otherwise utilizing an electric heater. FIG. 11 depicts an example 200 of a such a C4 splitter in which a distillation column is used to separate a mixture of 60% isobutene (-11.7 °C normal boiling point) and 40% n-butane (-1 °C normal boiling point) was modeled in Aspen Plus software using an approximate thermodynamic model (Peng-Robinson equation of state with Aspen databank parameters). As described above, the PCM storage is "charged" by transferring thermal energy to the PCM to thereby melt at least a portion of the PCM, and the PCM storage is "discharged" by transferring thermal energy from the PCM to the chemical process (reboiler) to freeze at least a portion of the PCM to a solid state. For example, the PCM for these modeled examples assume a compound that undergoes a liquid-solid phase change at a single temperature.

As noted in Table 1 below, the process was modeled with a "symmetric" cycle in which the cycle for "charging" is equal in length of time to the cycle for "discharging" the PCM, and with an "asymmetric" cycle in which the charging cycle is longer than the discharge cycle. Specifically, in the symmetric example the PCM is "charged" for 12 hours, and "discharged" for 12 hours during each 24 hour period; and in the asymmetric example the PCM is charged for 16 hours and discharged for 8 hours during each 24 hour period. Absorption of thermal energy from external (e.g., ambient) sources was not accounted for (assumed to be zero). In design of a real-world system, such external thermal energy can be accommodated by oversizing thermal capacity of PCM volume and heater(s) and/or heat pump(s), taking into account particular insulation values. These models assumed the PCM to be directly dispersed in a slurry or encapsulated in small spheres within a slurry.

As modeled, a feed stream 204 of the mixture is delivered to a distillation column 208 at a mass flow rate of 40 tonnes per hour, with the duty of reboiler 212 being 18.9 MW. The separated fraction of n-butane exits column 208 at a mass flowrate of 16 tonnes per hour to stream 216. The separated fraction of isobutene exits column 208 and is condensed via condenser 220 at a mass flowrate of 24 tonnes per hour to stream 224.

For a system configured according to FIG. 11, electric heater sizing and mass/volume of PCM material required for two different (symmetric and asymmetric) charging/discharging cycles were calculated and are included in Table 1. Both were modeled assuming an electric heater with 95% efficiency is used to provide thermal energy to the meet the reboiler duty during PCM charging, and all of the reboiler duty is met by thermal energy from the PCM during PCM discharge. The modeling assumed a phase change material is X70 PCM, available from Phase Change Material Products Ltd., having a melting point of 70 °C, a density of 1.085 tonnes/m³, a latent heat of 0.16 GJ/tonne or 0.044 MWh/tonne. The model assumed a maximum solid content during operation of 35% and a residence time for minimum holdup of 0.5 hours. The calculated heating costs are given for the case of 60 $/MWh for normal and 90 $/MWh peak electricity demand where the charge time is during normal and discharge time is during peak demand periods.

**Table 1: Power Inputs & Outputs for Electric Heater PCM System**

| Cycle Description | | Symmetric | Asymmetric |
|---|---|---|---|
| Charge time per day | h | 12 | 16 |
| Discharge time per day | h | 12 | 8 |
| Discharge/Charge | ratio | 1 | 0.5 |
| Charge/Average | ratio | 2 | 1.5 |
| Electric heater duty | MW | 39.8 | 29.8 |
| Total Storage (hours) | h | 12.5 | 8.5 |
| Total Storage (MWh) | MWh | 236.3 | 160.7 |
| PCM amount | t | 15,188 | 10,328 |
| PCM volume | m³ | 13,998 | 9,518 |
| OPEX, with PCM | $/day | 28,648 | 28,648 |
| OPEX, heater only | $/day | 35,811 | 33,423 |
| PCM System savings | $/day | 7,162 | 4,775 |

If a heat pump is used instead of a heater with the PCM system, the efficiency achieved will depend on the temperature of the available waste heat and the heat transfer temperature differentials achieved, which will also depend on how closely the PCM freezing/melting temperature matches the process temperature. Different heat pump configurations can be employed, such as using a process fluid or using an external working fluid. The source of waste heat source be associated with the unit requiring heat input or it may come from another part of the process.

### Examples 2 and 3: C4 Splitter w/ Electric Heater and PCM

Examples were also modeled for the use of the present PCM energy storage systems and methods to run heating cycles for a C4 splitter otherwise using an electric heat pump. The C4 splitter conditions are the same as those in Example 1.

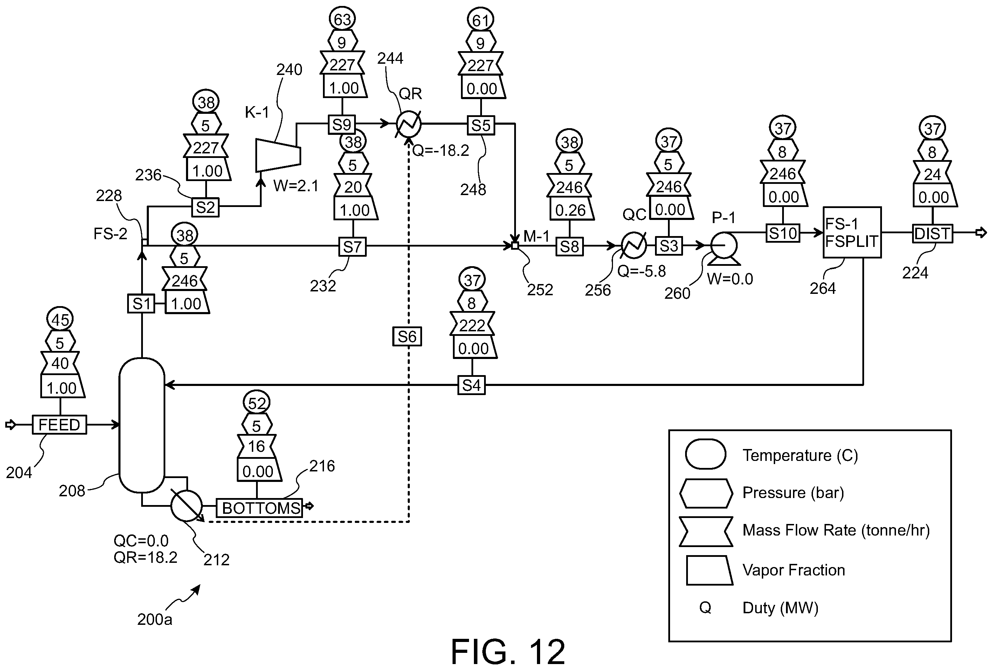

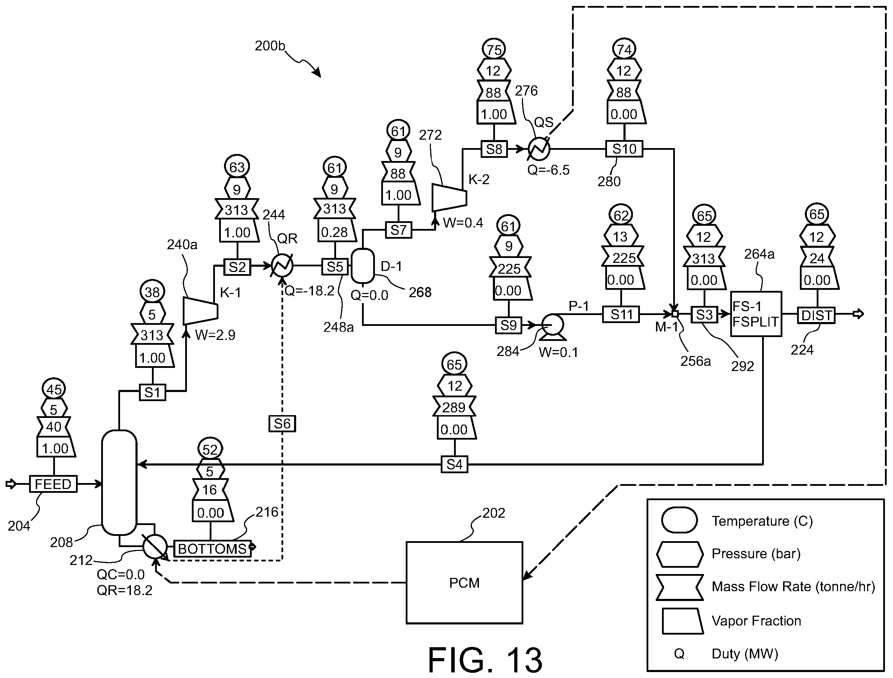

Example 2 models the use of a traditional heat pump in the system, and Example 3 models the use of a heat pump in combination with PCM storage, both for a case in which the ratio of waste heat (as modeled, from the final condenser) to heat input matches the peak/nonpeak electricity loads. FIG. 12 shows the simulation result of Example 2, and FIG. 13 shows the simulation result of the PCR heat pump.

As modeled for both FIGs. 11 and 12, a feed stream 204 of the mixture is delivered to a distillation column 208 at a mass flow rate of 40 tonnes per hour, with the duty of reboiler 212 being 18.9 MW. The separated fraction of n-butane exits column 208 at a mass flowrate of 16 tonnes per hour to stream 216.

As modeled for FIG. 12, in the system 200a the separated fraction of isobutene (overhead vapor) exits column 208 with additional fluid in the system and proceeds to a splitter 228, where the stream is divided into a first stream 232 with a mass flowrate of 20 tonnes per hour, and a second stream 236 with a mass flowrate of 226 tonnes per hour. Stream 236 proceeds to compressor 240 where the temperature of the vapor is increased from 38 °C to 63 °C and the vapor then proceeds to heat exchanger 244 where thermal energy (18.2 MW) is redirected (as indicated by stream S6) to meet the duty of reboiler 212. The extraction of thermal energy condenses the fluid stream from vapor to liquid and lowers its temperature from 63 °C to 61 °C, as indicated at stream 248. Stream 248 then rejoins stream 232 at mixer 252, after which thermal energy is extracted via heat exchanger 256 to fully condense the fluid to a fully liquid stream. Pump 260 then increases the pressure of the liquid stream from 5 bar to 8 bar, as shown, at which the stream reaches a splitter 264. At splitter 264, a first liquid fraction of isobutene is redirected at a mass flowrate of 24 tonnes per hour to an output stream 224, and a second liquid fraction is redirected at a mass flowrate of 222 tonnes per hour to distillation column 208 to mix with the feed stream within the distillation column.

The system of FIG. 13 is similar to that of FIG. 12, with the exception that the system 200b of FIG. 13 includes an additional compressor stage to upgrade at least some of waste heat of the overhead vapor from the distillation column to a level that is high enough to utilize that thermal energy to charge PCM 202 before the head vapors are condensed. More specifically, as modeled in FIG. 13, in the system 200b the separated fraction of isobutene (overhead vapor) exits column 208 with additional fluid in the system and proceeds to compressor 240a where the temperature of the vapor is increased from 38 °C to 63 °C and the vapor then proceeds to heat exchanger 244 where thermal energy (18.2 MW) is redirected (as indicated by stream S6) to meet the duty of reboiler 212. The extraction of thermal energy condenses the fluid stream from vapor to liquid and lowers its temperature from 63 °C to 61 °C, as indicated at stream 248a. Stream 248a is then directed to a flash drum 268 where a vapor portion of stream 248a is directed to a second compressor 272 where the temperature of the vapor is increased from 61 °C to 75 °C, after which thermal energy is extracted via heat exchanger 276 to fully condense the vapor into liquid stream 280, with the extracted thermal energy being used for charging PCM 202. In parallel, a pump 284 increases the temperature and pressure of liquid stream 288 from flash drum 268 from 61 °C to 62 °C and from 9 bar to 13 bar, respectively. Stream 288 then rejoins stream 280 at mixer 252a, and the combined stream 292 then proceeds to splitter 264a, from which a first liquid fraction of isobutene is removed at a mass flowrate of 24 tonnes per hour to stream 224, and a second liquid fraction is redirected at a mass flowrate of 289 tonnes per hour to distillation column 208 to mix with the feed stream within the distillation column.

Table 2 lists some of the comparative results for Examples 2 and 3. The ratio of peak to normal electrical costs required to make the heat pump-PCM system (Example 3) more attractive than the conventional heat pump (Example 2) is higher than for the heater-PCM system of Example 1. However the total amount of electrical energy required to be input in the Example 3 system is significantly less than for the electric heater PCM example, and the heat pump-PCM system carries the added benefit of the heat pump being operable even during periods of time when the compressor of the heat pump cannot be operated. For systems configured according to FIG. 12 (Example 2) and FIG. 13 (Example 3), electric heat pump sizing and mass/volume of PCM material required were calculated and are included in Table 2. Both were modeled assuming electric motor efficiency of 95%, that the heat pump is used to provide thermal energy to the meet the reboiler duty during PCM charging, and all of the reboiler duty is met by thermal energy from the PCM during PCM discharge. The modeling assumed a phase change material is X70 PCM, available from Phase Change Material Products Ltd., having a melting point of 70 °C, a density of 1.085 tonnes/m³, a latent heat of 0.16 GJ/tonne or 0.044 MWh/tonne. The models assumed a maximum solid content during operation of 35% and a residence time for minimum holdup of 0.5 hours. The calculated heating costs are given for the case of 60 $/MWh for normal and 90 $/MWh peak electricity demand where the charge time is during normal and discharge time is during peak demand periods.

**Table 2: Power Inputs & Outputs for Heat Pump PCM System**

| | | | |
|---|---|---|---|
| | | | |

| | | Example 2 (conventional heat pump) | Example 3 (PCM heat pump) |
|---|---|---|---|
| | | | |
| Conventional heat pump energy | MW | 2.1 | |
| | | | |
| PCM heat pump, main compressor stage (compressor 240a) | MW | | 2.9 |
| PCM heat pump, charging compressor stage (compressor 276) | MW | | 0.4 |
| PCM heat pump, overheads pump (pump 288) | MW | | 0.1 |
| PCM system, total power | MW | | 3.4 |
| PCM charging duty | MW | | 6.5 |
| PCM heat pump, reboiler | MW | | 18.2 |
| Charge time per day | h | | 17.7 |
| Discharge time per day | h | | 6.3 |
| Discharge/Charge | ratio | | 0.36 |
| Charge/Average | ratio | | 1.36 |
| Total Storage | MWh | | 115.5 |
| Discharge duty | MW | | 18.2 |
| | | | |
| PCM amount | t | | 7,424 |
| PCM volume | m³ | | 6,842 |
| Average power | MW | 2.2 | 2.6 |
| OPEX | $/day | 4,042 | 3,791 |

In addition to Examples 1-3, other and simpler PCM systems can also be used. For example, a heat pump can be configured to always operate at an overhead pressure needed for the PCM and therefore require only a single-stage compressor. Many processes include unused waste heat, such that one or more heat pumps can upgrade waste heat from other streams in the subject process or other process streams within a plant. Additionally or alternatively, an electric heat pump could be used to supply all of the reboiler duty such that all thermal energy extracted from the overhead vapors can be directed to the heat pump to charge the PCM. Likewise, an electric heater can be configured to supply a part of the reboiler duty depending on electricity availability and peak electricity price.

### Example 4:

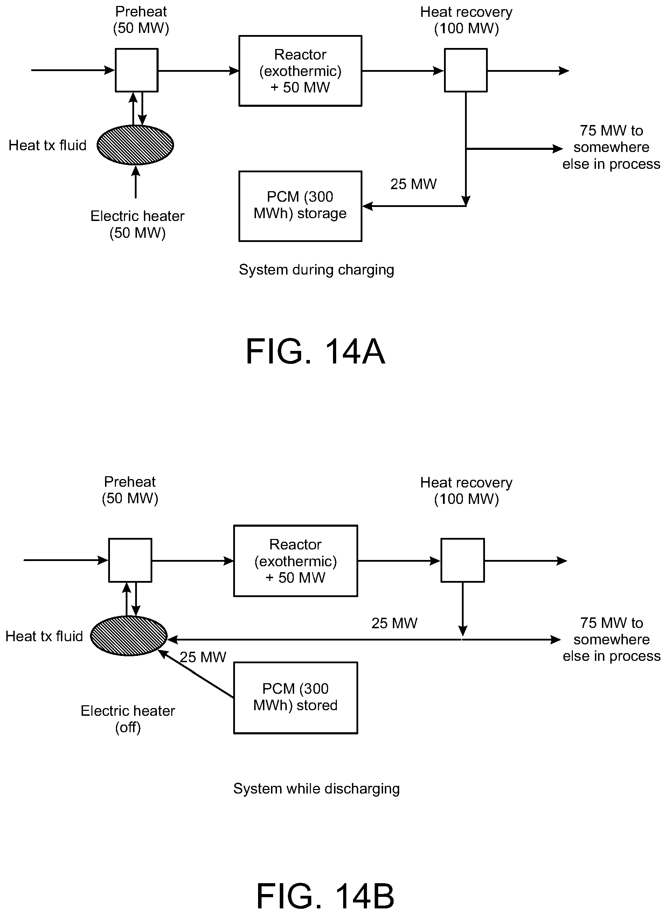

Example 4 illustrates the use of high temperature process heat to charge the PCM. FIGs. 14A and 14B depict schematic process diagrams of another example of the present PCM systems using high temperature process heat to charge the PCM, with FIG. 14A showing the system charging PCM 302, and FIG. 14B showing the system discharging the PCM. in this example, a chemical process feed is preheated at heat exchanger 304 and fed to a chemical reactor 308. The reactor effluent is cooled down while heat is recovered at 312 from the reactor effluent. The recovered heat is partially utilized elsewhere in the process and partially used in the process flow that includes PCM 302.

During the PCM charging part of the cycle (FIG. 14A), an electric heater is used for preheating the feed to the reactor. In this example, the electric heater heats an intermediate heat transfer fluid that is then cycled through a heat exchanger at 304 to preheat the process feed. During charging, the PCM portion of the heat recovered at 312 is used to charge PCM 302.

During the PCM discharging phase of the cycle (FIG. 14B), the electric heater can be shut off or redirected, and heat from PCM 302 and the PCM portion of the heat recovered at 312 are used to heat the heat transfer fluid that preheats the process feed at 304. The process thereby maintains continuity in heating the process feed throughout the entire cycle, including during hours-long periods of time when the electric heater is shut off (e.g., when electricity is unavailable or only available at elevated cost). The combination of a 300 MWh PCM heat storage and 25 MW process heat recovery covers the required 50 MW of process heat required during this time.

The above specification and examples provide a complete description of the structure and use of exemplary embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the present devices are not intended to be limited to the particular forms disclosed. Rather, they include all modifications and alternatives falling within the scope of the claims, and embodiments other than the one shown may include some or all of the features of the depicted embodiment. For example, components may be combined as a unitary structure, and/or connections may be substituted. Further, where appropriate, aspects of any of the examples described above may be combined with aspects of any of the other examples described to form further examples having comparable or different properties and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A system (100) comprising:
a chemical plant for producing a molecular product;
a contained volume of phase change material (PCM) (104);
a heat-exchange system configured to communicate thermal energy from the PCM (104) to one or more of a chemical reactant, a chemical intermediate, or the molecular product in the chemical plant;
where the PCM (104) is configured to transition from a first state to a higher-enthalpy second state at a transition temperature that is equal to or above a process temperature for the chemical reactant, the chemical intermediate or the molecular product; and
where the PCM (104) requires at least 2 MWh to transition from the first state to the second state.

2. The system (100) of claim 1, where thermal energy is transferred from one or more of the chemical reactant, the chemical intermediate, or the molecular product to the PCM (104).

3. The system (100) of any of claims 1-2, where the heat-exchange system comprises a heating circuit configured to circulate a heat-transfer fluid in thermal communication with the PCM (104) such that the heat-transfer fluid absorbs thermal energy from the PCM (104) and transfers at least a portion of the absorbed thermal energy to one or more of the chemical reactant, the chemical intermediate, or the molecular product.

4. The system (100) of any of claims 1-3, where the system further comprises a heat source for transferring thermal energy to the PCM (104) to transition the PCM (104) from the first state to the higher-enthalpy second state, and where the heat source comprises an electric heater (112).

5. The system (100) of claim 4, where the system (100) is configured to alternate between a charge cycle during which the electric heater (112) provides thermal energy to one or more of the chemical reactant, the chemical intermediate, or the molecular product and a discharge cycle during which the heat-exchange system transfers thermal energy from the PCM (104) to one or more of the chemical reactant, the chemical intermediate, or the molecular product, where during the charge cycle the electric heater provides thermal energy to both the PCM (104) and to one or more of the chemical reactant, the chemical intermediate, and the molecular product.

6. The system (100) of any of claim 4 or 5, where the heat source comprises a heat pump (120), where the heat pump (120) is configured to receive waste energy from a chemical reaction or a different process in the chemical plant.

7. The system (100) of any of claims 1-6, where a material production rate of the chemical plant is maintained at a constant level regardless of whether the PCM (104) is in the first state or the second state.

8. The system (100) of any of claims 6-7, further comprising:
an electric heater (112) configured to provide thermal energy to a chemical process (108) in the chemical plant;
where the system is configured to alternate between a charge cycle during which the electric heater (112) provides thermal energy to one or more of the chemical reactant, the chemical intermediate, or the molecular product, and a discharge cycle during which the heating circuit transfers thermal energy from the PCM (104) to one or more of the chemical reactant, the chemical intermediate, or the molecular product.

9. The system (100) of either of claims 4 or 6, where the heat source configured to transfer thermal energy to the PCM (104) is a first heat source, and the system (100) further comprises a second heat source configured to transfer thermal energy to a chemical process (108) in the chemical plant.

10. A method of storing and releasing thermal energy for heating in process (108) of a chemical plant, the method comprising:
converting a chemical reactant to a molecular product;
during a discharge cycle, circulating a heat-transfer fluid in thermal communication with a phase-change material (PCM) (104) such that the heat-transfer fluid absorbs thermal energy from the PCM (104) and transfers at least a portion of the absorbed thermal energy to one or more of the chemical reactant, a chemical intermediate, or the molecular product;
where the PCM (104) is configured to transition from a first state to a higher-enthalpy second state at a transition temperature that is above a process temperature of one or more of the chemical reactant, the chemical intermediate, or the molecular product; and
where the PCM (104) is configured to transfer at least 2 MWh of energy to the heat-transfer fluid during a single discharge cycle.

11. The method of claim 10, further comprising:
during a charge cycle, transferring thermal energy from a heat source to the heat transfer fluid.

12. The method of claim 11, where a 24-hour period includes one or more discharge cycles lasting a total 2-22 hours, and one or more recharge cycles lasting a total of 2-22 hours.

13. The method of claim 12, where the lengths of the charge and discharge cycles are adjusted or selected in response to a request from a power grid operator to reduce consumption of electric power.

14. The method of claim 13, where the lengths of the charge and discharge cycles are selected to reduce the total cost of electricity to continuously run the chemical process at a steady material production rate over the 24-hour period, taking into account variations in the price of electricity over the 24-hour period.

15. The method of claim 13, where the initiation and length of operation of the discharge cycle are determined in response to a temporary outage of at least one source of electricity to the process (108).

## Patentansprüche

1. System (100), umfassend:
eine chemische Anlage zur Herstellung eines molekularen Produkts;
ein enthaltenes Volumen von Phasenwechselmaterial (PCM) (104);
ein Wärmetauschsystem, das dazu ausgelegt ist, Wärmeenergie von dem PCM (104) auf eines oder mehrere von einem chemischen Reaktanten, einem chemischen Zwischenprodukt oder dem molekularen Produkt in der chemischen Anlage zu übertragen;
wobei das PCM (104) dazu ausgelegt ist, bei einer Übergangstemperatur, die gleich oder über einer Prozesstemperatur für den chemischen Reaktanten, das chemische Zwischenprodukt oder das molekulare Produkt ist, von einem ersten Zustand in einen zweiten Zustand mit höherer Enthalpie überzugehen; und
wobei das PCM (104) mindestens 2 MWh benötigt, um von dem ersten Zustand in den zweiten Zustand überzugehen.

2. System (100) nach Anspruch 1, wobei Wärmeenergie von einem oder mehreren von dem chemischen Reaktanten, dem chemischen Zwischenprodukt oder dem molekularen Produkt auf das PCM (104) übertragen wird.

3. System (100) nach einem der Ansprüche 1-2, wobei das Wärmetauschsystem einen Heizkreis umfasst, der dazu ausgelegt ist, ein Wärmeübertragungsfluid in thermischer Kommunikation mit dem PCM (104) zirkulieren zu lassen, so dass das Wärmeübertragungsfluid Wärmeenergie von dem PCM (104) absorbiert und mindestens einen Teil der absorbierten Wärmeenergie auf eines oder mehrere von dem chemischen Reaktanten, dem chemischen Zwischenprodukt oder dem molekularen Produkt überträgt.

4. System (100) nach einem der Ansprüche 1-3, wobei das System ferner eine Wärmequelle zum Übertragen von Wärmeenergie auf das PCM (104) umfasst, damit das PCM (104) von dem ersten Zustand in den zweiten Zustand mit der höheren Enthalpie übergeht, und wobei die Wärmequelle ein elektrisches Heizelement (112) umfasst.

5. System (100) nach Anspruch 4, wobei das System (100) dazu ausgelegt ist, zwischen einem Ladezyklus, während dessen das elektrische Heizelement (112) Wärmeenergie für eines oder mehrere von dem chemischen Reaktanten, dem chemischen Zwischenprodukt oder dem molekularen Produkt bereitstellt, und einem Entladezyklus abzuwechseln, während dessen das Wärmetauschsystem Wärmeenergie von dem PCM (104) auf eines oder mehrere von dem chemischen Reaktanten, dem chemischen Zwischenprodukt oder dem molekularen Produkt überträgt, wobei während des Ladezyklus das elektrische Heizelement Wärmeenergie sowohl für das PCM (104) als auch für eines oder mehrere von dem chemischen Reaktanten, dem chemischen Zwischenprodukt und/oder dem molekularen Produkt bereitstellt.

6. System (100) nach einem der Ansprüche 4 oder 5, wobei die Wärmequelle eine Wärmepumpe (120) umfasst, wobei die Wärmepumpe (120) dazu ausgelegt ist, Abfallenergie aus einer chemischen Reaktion oder einem anderen Prozess in der chemischen Anlage zu empfangen.

7. System (100) nach einem der Ansprüche 1-6, wobei eine Materialproduktionsrate der chemischen Anlage ungeachtet dessen, ob sich das PCM (104) in dem ersten Zustand oder dem zweiten Zustand befindet, auf einem konstanten Niveau gehalten wird.

8. System (100) nach einem der Ansprüche 6-7, ferner umfassend:
ein elektrisches Heizelement (112), das dazu ausgelegt ist, Wärmeenergie für einen chemischen Prozess (108) in der chemischen Anlage bereitzustellen;
wobei das System dazu ausgelegt ist, zwischen einem Ladezyklus, während dessen das elektrische Heizelement (112) Wärmeenergie für eines oder mehrere von dem chemischen Reaktanten, dem chemischen Zwischenprodukt oder dem molekularen Produkt bereitstellt, und einem Entladezyklus abzuwechseln, während dessen der Heizkreis Wärmeenergie von dem PCM (104) auf eines oder mehrere von dem chemischen Reaktanten, dem chemischen oder dem molekularen Produkt überträgt.

9. System (100) nach einem der Ansprüche 4 oder 6, wobei die Wärmequelle, die dazu ausgelegt ist, Wärmeenergie auf das PCM (104) zu übertragen, eine erste Wärmequelle ist und das System (100) ferner eine zweite Wärmequelle umfasst, die dazu ausgelegt ist, Wärmeenergie auf einen chemischen Prozess (108) in der chemischen Anlage zu übertragen.

10. Verfahren zum Speichern und Freisetzen von Wärmeenergie zur Erwärmung in einem Prozess (108) einer chemischen Anlage, wobei das Verfahren Folgendes umfasst:
Umwandeln eines chemischen Reaktanten in ein molekulares Produkt;
während eines Entladezyklus Zirkulierenlassen eines Wärmeübertragungsfluids in thermischer Kommunikation mit einem Phasenwechselmaterial (PCM) (104), so dass das Wärmeübertragungsfluid Wärmeenergie von dem PCM (104) absorbiert und mindestens einen Teil der absorbierten Wärmeenergie auf eines oder mehrere von dem chemischen Reaktanten, einem chemischen Zwischenprodukt oder dem molekularen Produkt überträgt;
wobei das PCM (104) dazu ausgelegt ist, bei einer Übergangstemperatur, die über einer Prozesstemperatur eines oder mehrerer von dem chemischen Reaktanten, dem chemischem Zwischenprodukt oder dem molekularen Produkt liegt, von einem ersten Zustand in einen zweiten Zustand mit höherer Enthalpie überzugehen; und
wobei das PCM (104) dazu ausgelegt ist, während eines einzigen Entladezyklus mindestens 2 MWh Energie auf das Wärmeübertragungsfluid zu übertragen.

11. Verfahren nach Anspruch 10, ferner umfassend:
während eines Ladezyklus Übertragen von Wärmeenergie von einer Wärmequelle auf das Wärmeübertragungsfluid.

12. Verfahren nach Anspruch 11, wobei ein 24-Stunden-Zeitraum einen oder mehrere Entladezyklen, die insgesamt 2-22 Stunden dauern, und einen oder mehrere Nachladezyklen umfasst, die insgesamt 2-22 Stunden dauern.

13. Verfahren nach Anspruch 12, wobei die Dauern der Lade- und Entladezyklen in Reaktion auf eine Anforderung von einem Stromnetzbetreiber angepasst oder ausgewählt werden, um den Verbrauch an elektrischer Leistung zu reduzieren.

14. Verfahren nach Anspruch 13, wobei die Dauern der Lade- und Entladezyklen ausgewählt werden, um die Gesamtstromkosten zu reduzieren, um den chemischen Prozess mit einer gleichbleibenden Materialproduktionsrate über den 24-Stunden-Zeitraum kontinuierlich durchzuführen, wobei Schwankungen des Strompreises über den 24-Stunden-Zeitraum berücksichtigt werden.

15. Verfahren nach Anspruch 13, wobei die Einleitung und die Dauer des Betriebs des Entladezyklus in Reaktion auf einen vorübergehenden Ausfall mindestens einer Stromquelle für den Prozess (108) bestimmt werden.

## Revendications

1. Système (100) comprenant :
une installation chimique pour produire un produit moléculaire ;
un volume contenu de matériau à changement de phase (PCM) (104) ;
un système d'échange de chaleur configuré pour communiquer de l'énergie thermique du PCM (104) à un ou plusieurs éléments parmi le réactif chimique, un intermédiaire chimique, ou le produit moléculaire dans l'installation chimique ;
où le PCM (104) est configuré pour effectuer une transition d'un premier état à un second état d'enthalpie plus élevée à une température de transition qui est égale ou supérieure à une température de processus pour le réactif chimique, l'intermédiaire chimique ou le produit moléculaire ; et
où le PCM (104) nécessite au moins 2 MWh pour effectuer une transition du premier état au second état.

2. Système (100) selon la revendication 1, où l'énergie thermique est transférée d'un ou de plusieurs éléments parmi le réactif chimique, l'intermédiaire chimique, ou le produit moléculaire au PCM (104).

3. Système (100) selon l'une quelconque des revendications 1 à 2, où le système d'échange de chaleur comprend un circuit de chauffage configuré pour faire circuler un fluide de transfert de chaleur en communication thermique avec le PCM (104) de telle sorte que le fluide de transfert de chaleur absorbe de l'énergie thermique du PCM (104) et transfère au moins une partie de l'énergie thermique absorbée à un ou plusieurs éléments parmi le réactif chimique, l'intermédiaire chimique, ou le produit moléculaire.

4. Système (100) selon l'une quelconque des revendications 1 à 3, où le système comprend en outre une source de chaleur pour transférer de l'énergie thermique au PCM (104) afin d'effectuer une transition du PCM (104) du premier état au second état à enthalpie plus élevée, et où la source de chaleur comprend un chauffage électrique (112).

5. Système (100) selon la revendication 4, où le système (100) est configuré pour alterner entre un cycle de charge pendant lequel le chauffage électrique (112) fournit de l'énergie thermique à un ou plusieurs éléments parmi le réactif chimique, l'intermédiaire chimique, ou le produit moléculaire et un cycle de décharge pendant lequel le système d'échange de chaleur transfère de l'énergie thermique du PCM (104) à un ou plusieurs éléments parmi le réactif chimique, l'intermédiaire chimique, ou le produit moléculaire, où pendant le cycle de charge le chauffage électrique fournit de l'énergie thermique à la fois au PCM (104) et à un ou plusieurs éléments parmi le réactif chimique, l'intermédiaire chimique, et le produit moléculaire.

6. Système (100) selon l'une quelconque des revendications 4 ou 5, où la source de chaleur comprend une pompe à chaleur (120), où la pompe à chaleur (120) est configurée pour recevoir de l'énergie résiduelle d'une réaction chimique ou d'un processus différent dans l'installation chimique.

7. Système (100) selon l'une quelconque des revendications 1 à 6, où un taux de production de matériau de l'installation chimique est maintenu à un niveau constant indépendamment du fait que le PCM (104) soit dans le premier état ou le second état.

8. Système (100) selon l'une quelconque des revendications 6 à 7, comprenant en outre :
un chauffage électrique (112) configuré pour fournir de l'énergie thermique à un processus chimique (108) dans l'installation chimique ;
où le système est configuré pour alterner entre un cycle de charge pendant lequel le chauffage électrique (112) fournit de l'énergie thermique à un ou plusieurs éléments parmi le réactif chimique, l'intermédiaire chimique, ou le produit moléculaire, et un cycle de décharge pendant lequel le circuit de chauffage transfère de l'énergie thermique du PCM (104) à un ou plusieurs éléments parmi le réactif chimique, l'intermédiaire chimique, ou le produit moléculaire.

9. Système (100) selon l'une quelconque des revendications 4 ou 6, où la source de chaleur configurée pour transférer de l'énergie thermique au PCM (104) est une première source de chaleur, et le système (100) comprend en outre une seconde source de chaleur configurée pour transférer de l'énergie thermique à un processus chimique (108) dans l'installation chimique.

10. Procédé de stockage et de libération d'énergie thermique pour le chauffage dans le processus (108) d'une installation chimique, le procédé comprenant :
la conversion d'un réactif chimique en un produit moléculaire ;
pendant un cycle de décharge, le fait de faire circuler un fluide de transfert de chaleur en communication thermique avec un matériau à changement de phase (PCM) (104) de telle sorte que le fluide de transfert de chaleur absorbe de l'énergie thermique du PCM (104) et transfère au moins une partie de l'énergie thermique absorbée à un ou plusieurs éléments parmi le réactif chimique, un intermédiaire chimique, ou le produit moléculaire ;
où le PCM (104) est configuré pour effectuer une transition d'un premier état à un second état d'enthalpie plus élevée à une température de transition qui est supérieure à une température de processus d'un ou de plusieurs éléments parmi le réactif chimique, l'intermédiaire chimique, ou le produit moléculaire ; et où le PCM (104) est configuré pour transférer au moins 2 MWh d'énergie au fluide de transfert de chaleur pendant un seul cycle de décharge.

11. Procédé selon la revendication 10, comprenant en outre :
pendant un cycle de charge, le transfert d'énergie thermique d'une source de chaleur au fluide de transfert de chaleur.

12. Procédé selon la revendication 11, où une période de 24 heures inclut un ou plusieurs cycles de décharge durant au total de 2 à 22 heures, et un ou plusieurs cycles de recharge durant au total de 2 à 22 heures.

13. Procédé selon la revendication 12, où les longueurs des cycles de charge et de décharge sont ajustées ou sélectionnées en réponse à une demande d'un opérateur de réseau électrique pour réduire la consommation de puissance électrique.

14. Procédé selon la revendication 13, où les longueurs des cycles de charge et de décharge sont sélectionnées pour réduire le coût total de l'électricité afin de faire fonctionner en continu le processus chimique à un taux de production de matériau stable sur la période de 24 heures, en tenant compte des variations du prix de l'électricité sur la période de 24 heures.

15. Procédé selon la revendication 13, où le lancement et la durée d'exploitation du cycle de décharge sont déterminés en réponse à une coupure temporaire d'au moins une source d'électricité vers le processus (108).
